(19) Europäisches Patentamt European Patent Office Office européen des brevets

(11) **EP 2 509 381 B1**

(12) **EUROPEAN PATENT SPECIFICATION**

(45) Date of publication and mention
of the grant of the patent:
**02.01.2019 Bulletin 2019/01**

(21) Application number: **11780089.6**

(22) Date of filing: **06.04.2011**

(51) Int Cl.:
*H04W 72/04* (2009.01)

(86) International application number:
**PCT/CN2011/072474**

(87) International publication number:
**WO 2011/140868 (17.11.2011 Gazette 2011/46)**

(54) **MULTIPLEXING IN A MULTI-USER MULTIPLEXING TECHNOLOGY (VAMOS)**

MULTIPLEXING IN EINER MEHRBENUTZER-MUILTIPLEXING-TECHNOLOGIE (VAMOS)

MULTIPLEXAGE DANS UNE TECHNOLOGIE DU MULTIPLEXAGE MULTI-UTILISATEURS (VAMOS)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2010 CN 201010174120**

(43) Date of publication of application:
**10.10.2012 Bulletin 2012/41**

(73) Proprietor: **ZTE Corporation**
**Shenzhen, Guangdong 518057 (CN)**

(72) Inventor: **HAO, Ruijing**
**Guangdong 518057 (CN)**

(74) Representative: **Taor, Simon Edward William**
**Venner Shipley LLP**
**200 Aldersgate**
**London EC1A 4HD (GB)**

(56) References cited:
**WO-A1-2009/121309      WO-A1-2012/088839**
**CN-A- 101 553 030      CN-A- 101 657 001**
**US-A1- 2005 286 408**

- **LG ELECTRONICS INC: "User pairing scheme for VAMOS", 3GPP DRAFT; GP-090631 USER PAIRING SCHEME FOR VAMOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Shenzhen; 20090511, 6 May 2009 (2009-05-06), XP050414832, [retrieved on 2009-05-06]**
- **SAMSUNG ELECTRONICS CO ENHANCED CHANNEL ORGANIZATION SCHEMES FOR SACCH: "Enhanced Channel Organization Schemes for SACCH", 3GPP DRAFT; AHG1-090093 ENHANCED CHANNEL ORGANIZATION SCHEMES FOR SACCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. GERAN WG1, no. Sophia Antipolis, France; 20091019 - 20091021, 15 October 2009 (2009-10-15), XP050648199, [retrieved on 2009-10-15]**

**Description**

Technical Field

The present invention relates to the communication field, and particularly, to a user multiplexing method and apparatus in the multi-user multiplexing technology.

Background of the Related Art

The conventional circuit switching (CS) service is to allocate a slot to a user. In order to increase the channel capacity, i.e. bear more services on the same time frequency resource, a multi-user multiplexing technology VAMOS (Voice services over Adaptive Multi-user Channels on One Slot) is generated, and this technology is to multiplex a plurality of users on one slot and one ARFCN (Absolute Radio Frequency Channel Number).

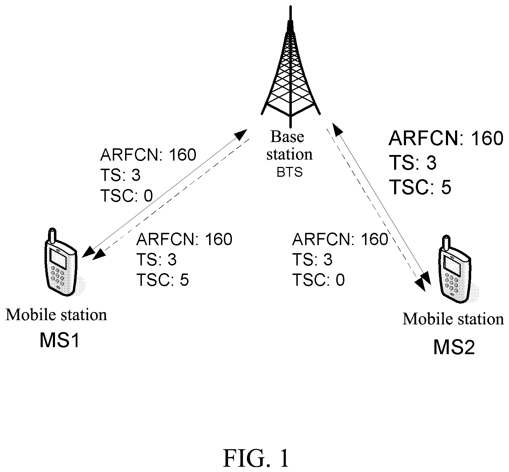

FIG. 1 shows the VAMOS of multiplication by two users, at this moment, two subchannels are provided, two mobile stations (MSs) work on the same radio resources, each mobile station (MS) occupies one subchannel, and the subchannel is distinguished according to an orthogonal or approximately orthogonal training sequence. As to the conventional CS voice service, one user occupies one slot, and the GMSK (Gaussian Minimum Shift-frequency Keying) modulation manner is used in both uplink and downlink.

As to the VAMOS multi-user multiplexing technology, as shown in FIG. 1, there are two users MS1 and MS2 on one slot: in downlink, the base station sends a QPSK (Quadrature Phase Shift Keying) like signal, the mobile station cancels the signals for the other users which are taken as interference by way of the mutually orthogonal training sequence and interference cancellation technology so as to demodulate its own signal; and when in uplink, the two multiplexed mobile stations (MSs) still use GMSK modulation to send signals on the same slot, and the base station side uses the enhanced demodulation algorithm to demodulate the signals of two MSs and distinguish the users by way of different training sequences.

If two mobile stations (MSs) multiplex the same physical channel, these two multiplexing users have to be sorted strictly, so as to ensure these two multiplexing users can still work normally and will not exert bad effects on other users in the system.

Many factors need to be taken into account during the sorting of multiplexing users, such as RXLEV (Received signal level), RXQUAL (Received signal quality), and SCPIR (The Sub Channel Power Imbalance Ratios) need to be taken into account, and the factors are associated with each other.

Currently, the general concept of selecting a user combination for multiplexing is to take each parameter into account separately and the threshold corresponding to each parameter is set respectively so as to delimit those users which can multiplex. Since there are many factors affecting user multiplexing and there is relevance among these factors which is difficult to be quantized, the selection technology of user combination for multiplexing in the related art has the following defects:

all the users are viewed the same, separate parameters are taken into account respectively, and in case of many parameters, repeated operation will occur; moreover, since a certain parameter is taken into account separately, the relevance is ignored, then situations such as the restriction is too loose or excessive may occur; and since the configuration is carried out according to single parameters, relevant parameters cannot be configured flexibly, neither better multiplexing effects can be achieved.

The document US2005286408A1 discloses a method for allocating a radio resource in an OFDM/OFDMA.

Summary of the Invention

The technical problem to be solved according to a multiplexing method according to claim 1 and apparatus according to claim 8 , for solving the problems in the related art that the flexibility of parameter configuration is poor which caused by the relevance among parameters fails to be taken into account and repeated calculation caused by excessive restriction. Further improvements and embodiments are provided in the dependent claims. The embodiments and/ or examples of the following description which are not covered by the appended claims are considered as not being part of the present invention.

Also provided is a multiplexing method in the multi-user multiplexing technology, comprising:

sorting out one or more multiplexing resource pools according to a multiplexing parameter combination;

ranking multiplexing users in the one or more multiplexing resource pools according to a value parameter; and

carrying out multi-user multiplexing on adjacent multiplexing users according to a ranking result.

In this case, the step of carrying out multi-user multiplexing on adjacent multiplexing users according to a ranking result begins when a multi-user multiplexing starting threshold is reached and stops when a multi-user multiplexing penetration rate threshold is reached.

In this case, the step of sorting out one or more multiplexing resource pools according to a multiplexing parameter combination comprises:

first constructing a multiplexing space by taking each multiplexing parameter as one dimension, and then dividing the multiplexing space into a plurality of resource pools by using a threshold value corresponding to each multiplexing parameter; sorting out a resource pool with a power thereof being required to be down-regulated or to be kept unchanged as a strong signal area from the plurality of resource pools; and acquiring an average multiplexing parameter value combination of steady state users which support the multi-user multiplexing technology, judging the resource pool to which each steady state user belongs according to the average multiplexing parameter value combination, and constructing the steady state user which belongs to the strong signal area as a multiplexing resource pool.

The method further comprises:

dividing the multiplexing resource pool into several sub-resource pools according to a multiplexing parameter sub-threshold value inside the multiplexing resource pool, judging the sub-resource pool to which each steady state user belongs inside that multiplexing resource pool according to the average multiplexing parameter value combination, and constructing a sub-multiplexing resource pool.

The multiplexing parameter combination is a combination (RXLEV, RXQUAL) of received signal level (RXLEV) and received signal quality (RXQUAL). Threshold values corresponding to the received signal level (RXLEV) comprise: a low level threshold (Lev_thLow) and a high level threshold (Lev thHigh); threshold values corresponding to the received signal quality (RXQUAL) comprise: a low quality threshold (Qual_thLow) and a high quality threshold (Qual_thHigh).

The multiplexing parameter combination is a combination (RXLEV, RXQUAL, SCPIR) of received signal level (RXLEV), received signal quality (RXQUAL) and the sub channel power imbalance rations (SCPIR). R).

Threshold values corresponding to the received signal level (RXLEV) comprise: a low level threshold (Lev_thLow) and a high level threshold (Lev thHigh); threshold values corresponding to the received signal quality (RXQUAL) comprise: a low quality threshold (Qual thLow) and a high quality threshold (Qual thHigh); threshold values corresponding to the sub channel power imbalance rations (SCPIR) comprise: a minimum threshold value (SCPIR_Min) and a maximum threshold value (SCPIR Max).

The value parameter is received signal level (RXLEV), or received signal quality (RXQUAL) or sub channel power imbalance rations (SCPIR).

Ranking the multiplexing users in one or more multiplexing resource pools according to the value parameter is to rank the multiplexing users according to the received signal level (RXLEV) from high to low, or according to the received signal quality (RXQUAL) from high to low, or according to the sub channel power imbalance rations (SCPIR) from high to low.

Sorting out one or more multiplexing resource pools according to the multiplexing parameter combination and ranking the multiplexing users in one or more multiplexing resource pools according to the value parameter are to rank the users already in a cell; and carrying out multi-user multiplexing on adjacent multiplexing users according to the ranking result is to firstly carryout adjacent pairing multiplexing on the users already in the cell according to the rank result when multiplexing.

The above method further comprises: after a new user enters the cell, if that new user meets a multiplexing condition, then directly pairing that new user with an already ranked user to carry out multiplexing.

If the number of users contained in the multiplexing resource pool is less than the threshold value of the number of users in the plurality of multiplexing resource pools sorted out according to the multiplexing parameter combination, when multiplexing, the users in the multiplexing resource pool where the number of users is less than the threshold value of the number of users are combined with users in other multiplexing resource pools to carry out ranking and multiplexing.

Also provided is a multiplexing apparatus in a multi-user multiplexing technology, comprising:

a multiplexing resource pool sorting module configured to sort out one or more multiplexing resource pools according to a multiplexing parameter combination;
a ranking module configured to rank multiplexing users in the one or more multiplexing resource pools according to a value parameter; and
a multiplexing module configured to carry out multi-user multiplexing on adjacent multiplexing users according to a ranking result.

The multiplexing module is configured to begin to carry out multi-user multiplexing on the adjacent multiplexing users according to a ranking result when a multi-user multiplexing starting threshold is reached and stop multiplexing when a multi-user multiplexing penetration rate threshold is reached.

The multiplexing resource pool sorting module comprises a space construction unit, a resource pool sorting unit and a multiplexing resource pool construction unit, wherein

the space construction unit is configured to construct a multiplexing space by taking each multiplexing parameter as one dimension, and then divide the multiplexing space into a plurality of resource pools by using a threshold value corresponding to each multiplexing parameter;
the resource pool sorting unit is configured to sort out a resource pool with a power thereof being required to be down-regulated or to be kept unchanged as a strong signal area from the plurality of resource pools divided;
the multiplexing resource pool construction unit is configured to acquire an average multiplexing parameter value combination of steady state users which support the multi-user multiplexing technology, judge the resource pool to which each steady state user belongs according to the average multiplexing parameter value combination, and construct the steady state user which belongs to the strong signal area as a multiplexing resource pool.

The space construction unit is further divide the multiplexing resource pool into several sub-resource pools according to a multiplexing parameter sub-threshold value inside the multiplexing resource pool; the multiplexing resource pool construction unit is further configured to judge the sub-resource pool to which each steady state user belongs inside that multiplexing resource pool according to the average multiplexing parameter value combination, and construct a sub-multiplexing resource pool.

The multiplexing parameter combination is a combination (RXLEV, RXQUAL) of received signal level (RXLEV) and received signal quality (RXQUAL), wherein threshold values corresponding to the RXLEV comprise: a low level threshold (Lev_thLow) and a high level threshold (Lev_thHigh); threshold values corresponding to the RXQUAL comprise: a low quality threshold (Qual_thLow) and a high quality threshold (Qual_thHigh).

The multiplexing parameter combination is a combination (RXLEV, RXQUAL, SCPIR) of received signal level (RXLEV), received signal quality (RXQUAL) and the sub channel power imbalance rations (SCPIR), wherein

threshold values corresponding to the RXLEV comprise: a low level threshold (Lev_thLow) and a high level threshold (Lev _thHigh); threshold values corresponding to the RXQUAL comprise: a low quality threshold (Qual thLow) and a high quality threshold (Qual thHigh); threshold values corresponding to the SCPIR comprise: a minimum threshold value (SCPIR Min) and a maximum threshold value (SCPIR Max).

In the multiplexing method and apparatus in the multi-user multiplexing technology according to the present invention, the parameters affecting user multiplexing are taken into consideration comprehensively, a parameter combination space is configured, the parameter combination can be selected flexibly according to the application, the users are grouped according to the basic parameter feature to form a resource pool for user multiplexing; and the multiplexing users are sorted for a second time in the resource pool by selecting a value parameter flexibly according to the application, and multiplication is carried out on the second sorted multiplexing users. In the present method, the parameters affecting user multiplexing are taken into consideration comprehensively, the users are grouped and treated differently, and aspects such as number of users, number of parameters, parameter range and parameter combination can be flexibly extended, and finally the users can keep better operation state after multiplexing.

Brief Description of Drawings

FIG. 1 is a schematic diagram of a VAMOS with two multiplexing users.

FIG. 2 is basic flowchart of VAMOS user multiplexing.

FIG. 3 is a schematic diagram of area division by taking quality and level as coordinates respectively.

FIG. 4 is a schematic diagram of sub-area division of a certain area by taking quality and level as coordinates respectively.

FIG. 5 is a schematic diagram of area division by taking quality, level and SCPIR as coordinates respectively.

FIG. 6 is a structural block diagram of a multi-user multiplexing apparatus in the embodiments.

Preferred Embodiments of the Present Invention

In order to make the object, technical solution and advantages of the present invention more clear, the present invention will be further described in detail in conjunction with the accompanying drawings.

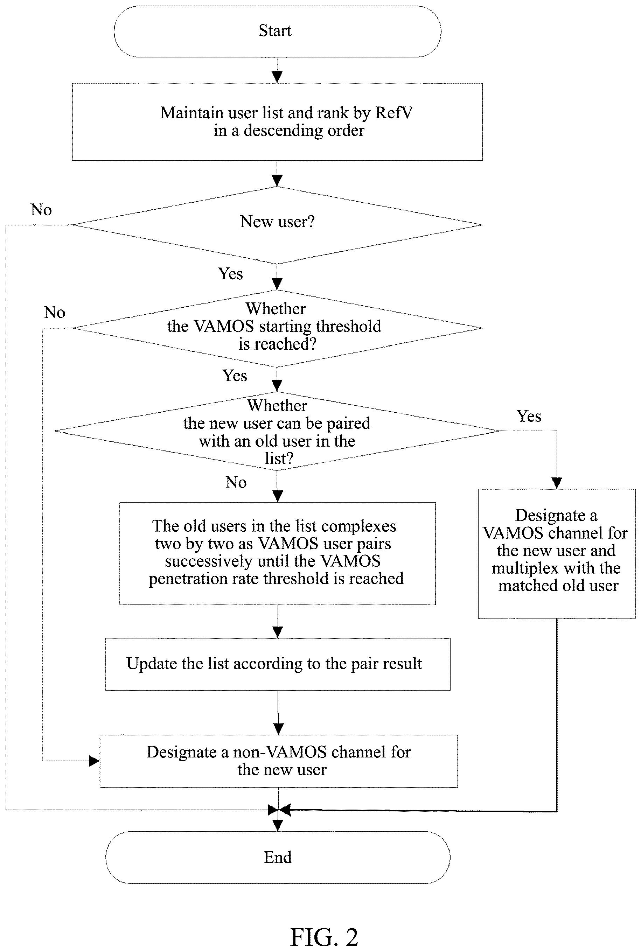

As shown in FIG. 2, it shows an exemplary flowchart of a multiplexing method in the multi-user multiplexing technology carrying out multi-user multiplexing. In this case,

first, a steady state user list of the current cell is maintained, and it is ranked according to a value parameter RefV (Reference Value is a self-defined ranking reference index) in a descending order, wherein all the user terminals in the list can carry out VAMOS multiplexing; then, an starting threshold (which threshold reflects the occupation rate of the cell channel) of the VAMOS and a penetration rate threshold (which threshold sets the proportion of the VAMOS in the cell) of the VAMOS are configured, and the new user is monitored when accessing, whether the network has reached the starting threshold of the VAMOS is judged, if yes, then the VAMOS multiplexing function of the network will be started up; then, after the VAMOS multiplexing function is started up, the old users in the list are switched as VAMOS user pairs in a two-two multiplexing manner until the set penetration rate threshold of the VAMOS is reached; and if the value parameter (RefV) of a newly accessing user terminal as supplement is suitable, it can be matched with a user with similar performance in the list to be a user pair, and a VAMOS channel will be directly designated.

Finally, the list is updated according to the VAMOS users with the multiplexing thereof being successful.

In the multiplexing flow shown in FIG. 2, the key problem is how to select a parameter combination and how to sort out a multiplexing user according to the combination (i.e. how to select the value parameter RefV and how to use it).

Hereinafter, an intuitive and effective sorting method is provided, which sorting method takes various necessary factors into account, which is easy to realize the sorting of the multiplexing users and has scalability, such as the number of users can be increased, and the number of parameters which are taken into account can be increased, etc.

First, the parameters affecting user multiplexing are sorted and ranked as {a,b,c...} according to significance and independence, then the most significant parameters with good independence are combined as a basic multiplexing parameter combination, such as (a, b). In addition, different extended parameter combinations can be selected according to different particular applications, such as the basic multiplexing parameter combination (a, b) can be extended to the multiplexing parameter combination (a, b, c).

Then, a suitable parameter combination is selected as a reference coordinate system, and a special parameter value (such as the threshold value corresponding to each multiplexing parameter) is selected to carry out area division on the coordinate space. These areas are divided into strong signal areas and weak signal areas entirely, and the strong signal areas are numbered.

Then, the base station extracts the corresponding parameter factors from the signals sent by all the steady state (with many measurement reports) VAMOS terminals in the cell, and carries out weighting and averaging on several results so as to smooth it and obtain the final reference value (x, y) (corresponding parameter combination (a, b)) or (x, y, z) (corresponding parameter combination (a, b, c)) corresponding to the multiplexing user. The area to which the user belongs can be determined by finding the location of the reference value in the coordinate system. As such, the users are divided into different groups according to the areas to which the users belong, and this constitutes the first sorting. The users in each area constitute a multiplexing resource pool. The users in the same resource pool have similar features.

After having divided out the resource pools and determined the affiliation users of the resource pool, the users in each strong signal area resource pool are ranked according to the selected value parameter RefV, i.e. a parameter is selected as the value parameter RefV, which parameter can be the multiplexing parameter a or b in the coordinate system or otherwise. Different signal areas can select different parameters as RefV according to the requirements of the scenario applications (preliminary judgment can be carried out according to the area). All the rankings indicate signals from strong to weak.

Finally, the users with better signals are two-two (or 3, if it is 3-user multiplexing) multiplexed successively according to the ranking result. This constitutes the second sorting and the parameter combination can be flexibly configured according to the user.

In a preferred improvement, if there are few users in the multiplexing resource pool of a certain strong signal area, the users in this area can be ranked together with the users in the multiplexing resource pools corresponding to other areas. If there are many users in the multiplexing resource pool of a certain strong signal area, this strong signal resource pool can be divided into a plurality of sub-resource pools in this area as required.

Embodiment 1:

In this embodiment, the received signal level (RXLEV) and received signal quality (RXQUAL) are selected as the basic multiplexing parameter combination (RXLEV, RXQUAL), and detailed description is carried out on the implementation of the technical solution in conjunction with the accompanying drawings.

In step 1, according to the multiplexing parameter combination (RXLEV, RXQUAL) and the threshold value corresponding to each multiplexing parameter, the multiplexing space formed by taking each multiplexing parameter in the combination as a dimension is divided into several sub-spaces (i.e. resource pool) by using corresponding thresholds.

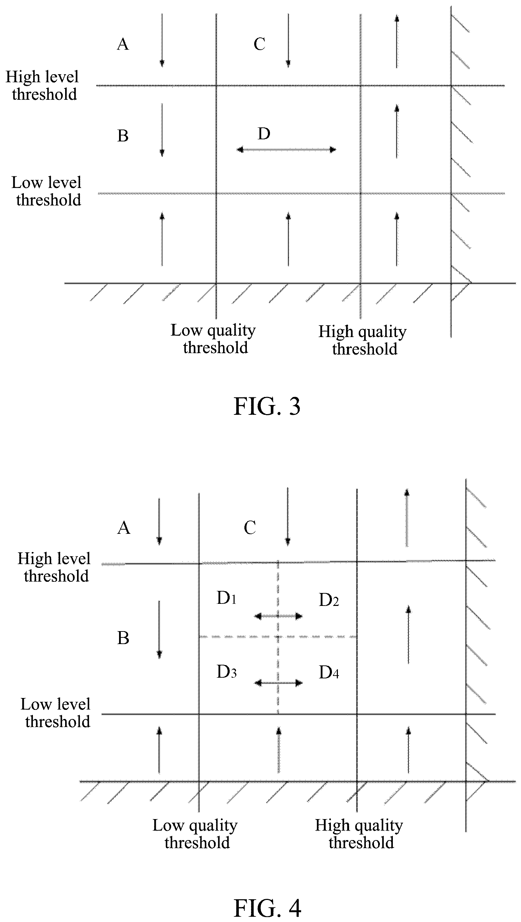

The received signal level (RXLEV) and received signal quality (RXQUAL) are taken as the coordinate axes to form a reference coordinate system (RXLEV, RXQUAL), as shown in FIG. 3. In this reference coordinate system, the RXQUAL is taken as the horizontal coordinate and the low quality threshold Qual_thLow and high quality threshold Qual thHigh are taken as the boundaries; the RXLEV is taken as the vertical coordinate, and the high level threshold Lev_thHigh and low level threshold Lev_thLow area taken as boundaries; by way of the above boundaries at the thresholds, the entire (RXLEV, RXQUAL) coordinate system is divided into nine areas, and the switching indicated by the areas outside the dashed line boundaries is not under our consideration.

In step 2, in the sub-spaces divided from step 1, one or more sub-spaces are sorted out as strong signal areas, i.e. strong signal resource pools.

As shown in FIG. 3, all the sub-spaces can be denoted simply in the coordinate system space, for example, it is denoted that the power is required to be up-regulated (indicated by an up arrow), the power is required to be down-regulated (indicated by a down arrow), or the power is required to be kept unchanged (horizontal arrow). When sorting, the sub-spaces in which it is denoted that the power is required to be down-regulated and the power is required to be kept unchanged can be defined as strong signal areas, and the area in which the power is required to be up-regulated is defined as a weak signal area. According to the denotation result, the sub-spaced labeled as strong signal areas can be sorted out, for example, in FIG. 3, the strong signal areas are numbered as {A, B, C, D}, then forming A, B, C and D four strong signal areas.

In step 3, the sub-space to which each user belongs is determined, the users in the strong signal area are constructed as a multiplexing resource pool, i.e.

judge to which resource pool each user belongs respectively so as to learn which multiplexing users each resource pool correspondingly includes.

The RXLEV and RXQUAL of all the steady state users which support VAMOS multiplexing in the cell are recorded, and the closest P groups of record values are kept. After the VAMOS multiplexing function is started up, this P groups of measurement values $(Lev_i, Qual_i)$ $0 < i \le P$ are weighted and averaged so as to be smooth to obtain a metering value $(Lev_V, Qual_V)$. The metering value is used to determine which strong signal area indicated in step 2 the sub-space to which this user belongs is by reference to the division of the sub-space area in step 1, and the multiplexing users in the strong signal area are constructed as multiplexing resource pools A, B, C, and D.

In step 4, ranking is carried out according to the value parameter, and the user multiplexing pairs in the resource pools are sorted in the multiplexing resource pool A, B, C, and D.

As to multiplexing resource pool A: $\{U_1^A, U_2^A, \ldots, U_a^A\}$, $a \ge 2$, A is obtained according to the rank of the received level $Lev$ of each user: $\{U_{Lev1}^A, U_{Lev2}^A, \ldots, U_{leva}^A\}$, $a \ge 2$, then the user $\{U_{Lev1}^A, U_{Lev2}^A\}$ can be multiplexed together. In this case, the received level $Lev$ is taken as the value parameter. As to other users and other multiplexing resource pools, they can be operated according to the method in step 4, until the set VAMOS penetration rate threshold is reached.

If it is found that there are too few users in a certain multiplexing resource pool, for example, as to area A, $a = 1$, this user can be placed into area B, and the users in these two areas can be operated together according to the above method, i.e. the users in two resource pools are ranked and then multiplexed together.

If there are too many users in a certain resource pool, since it is relatively rough to carry out division according to the multiplexing parameter threshold and there are too many users, it can be considered to further divide this resource pool into several sub-areas and several sub-resource pools, then steps 3 and 4 are repeated for each multiplexing resource pool. As shown in FIG. 4, area D is further divided into $\{D_1, D_2, D_3, D_4\}$, then user multiplexing can be done for this area by repeating the operations in step 3 and step 4 respectively. When dividing the resource pool as shown in FIG. 3, the threshold values of signal level are: up/down threshold 33/25, and the threshold values of signal quality are: up/down threshold 1/3.

Simplified embodiment 1: since in a cell, the mobile phone terminals in the steady state occupy the highest proportion and are in a relatively stable state, embodiment 1 can be simplified, and only the users in strong signal area D in the steady state are multiplexed. That is, only step 4 is performed on area D. The condition of steady state can be set as a user between the up and down thresholds of the signal level and at the same time between the up and down threshold of the signal quality.

Embodiment 2:

The basic parameter combination in embodiment 1 is extended, and a parameter SCPIR (The Sub Channel Power Imbalance Ratios) is added to obtain an extended parameter combination (RXLEV, RXQUAL, SCPIR). In the following, the implementation of the technical solution will be further described in detail in conjunction with the accompanying drawings.

In step 1, the received signal level, received signal quality and SCPIR are taken as the coordinate axes to form a reference coordinate system (RXLEV, RXQUAL, SCPIR).

Then, the horizontal coordinate system is divided into nine areas according to Qual_thLow and Qual thHigh, Lev thHigh and Lev_thLow, as embodiment 1. The SCPIR coordinate is divided according to SCPIR_Min and SCPIR_Max.

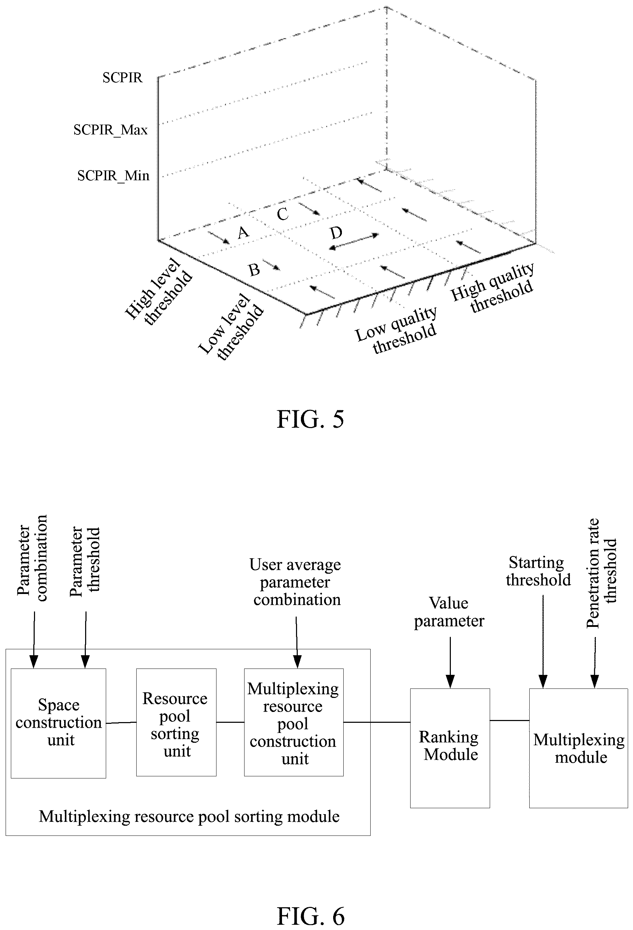

In step 2, as long as it falls into the (SCPIR_Min, SCPIR_Max) segment in the SCPIR coordinate, the condition is met. The power regulation direction of each area is marked in the horizontal coordinate system, the strong signal areas are defined according to the method in embodiment 1, and the strong signal areas are numbered as {A, B, C, D}, as shown in FIG. 5.

In step 3, the RXLEV and RXQUAL of all user terminals which support VAMOS multiplexing in the cell are recorded, and the closest P groups of record values are kept.

After the VAMOS multiplexing function is started up, these P groups of measurement values $(Lev_i, Qual_i)$ $0 < i \le P$ are weighted and averaged so as to be smooth to obtain a metering value $(Lev_V, Qual_V)$. The metering value is used to determine the sub-space to which this user belongs by reference to the division of horizontal coordinate system in step 2, and the users in the strong signal area construct corresponding multiplexing resource pools.

In step 4, user multiplexing pair sorting in the multiplexing resource pool is carried out on strong signal areas A, B, C and D successively.

As to multiplexing resource pool A: $\{U_1^A, U_2^A, \ldots, U_a^A\}$, $a \ge 2$, A is obtained according to the rank of each user: $\{U_{Lev1}^A, U_{Lev2}^A, \ldots, U_{leva}^A\}$, $a \ge 2$, the SCPIRs of two adjacent users are calculated successively,

$$Scpir_{i,i+1} = 20\log\left(\frac{U^A_{Levi}}{U^A_{Lev(i+1)}}\right) \quad \text{if}$$

$Scpir_{i,i+1} \in [SCPIR\_Min, SCPIR\_Max]$, then these two users are multiplexed together. The users in all the resource pools are operated successively until the VAMOS penetration rate threshold is reached.

If there are too few users in a certain resource pool, for example, as to area A, $a = 1$, this user can be placed into area B, and the users in these two areas can be operated together according to the above method.

If there are too many users in a certain resource pool since the division range is relatively rough, it can be considered to further divide this area, then steps 3 and 4 are repeated. As shown in FIG. 4, area D is further divided into $\{D_1, D_2, D_3, D_4\}$, then step 3 is repeated on these sub-resource pools respectively, and the operation of step 4 can carry out the user multiplexing in this area.

In step 4 in embodiment 1, the users in the resource pool are ranked according to $Lev_V$ so as to multiplex adjacent users, which already implies the restriction condition of SCPIR, therefore, when the demodulation algorithm has special requirements on SCPIR, embodiment 2 is more practical. In general, i.e. the powers of two users are required to be close, embodiment 1 is simpler and more practical. When SCPIR is used as the ranking parameter of step 4 in embodiment 1, embodiment 2 can be obtained. It can be seen that embodiment 2 is a special example of embodiment 1.

Simplified embodiment 2:

Since in a cell, the mobile phone terminals in the steady state occupy the highest proportion and are in a relatively stable state, embodiment 2 can be simplified, and only the users in strong signal area D in the stable state are multiplexed. That is, only step 4 is performed on area D. The condition of steady state can be set as a user between the up and down thresholds of the signal level and at the same time between the up and down threshold of the signal quality.

Embodiment 3: as shown in FIG. 6, it shows a modular schematic diagram of a multiplexing apparatus in the multi-user multiplexing technology, which multiplexing apparatus comprises: a multiplexing resource pool sorting module configured to sort out one or more multiplexing resource pools according to a multiplexing parameter combination; a ranking module configured to rank multiplexing users in the one or more multiplexing resource pools according to a value parameter; and a multiplexing module configured to carry out multi-user multiplexing on adjacent multiplexing users according to a ranking result.

In this case, the multiplexing module is configured to begin to carry out multi-user multiplexing on the adjacent multiplexing users according to a ranking result when a multi-user multiplexing starting threshold is reached and stop multiplexing when a multi-user multiplexing penetration rate threshold is reached.

In this case, the multiplexing resource pool sorting module comprises a space construction unit, a resource pool sorting unit and a multiplexing resource pool construction unit, wherein the space construction unit is configured to construct a multiplexing space by taking each multiplexing parameter as one dimension, and then divide the multiplexing space into a plurality of resource pools by using a threshold value corresponding to each multiplexing parameter; the resource pool sorting unit is configured to sort out a resource pool with a power thereof being required to be down-regulated or to be kept unchanged as a strong signal area from the plurality of resource pools divided; the multiplexing resource pool construction unit is configured to acquire an average multiplexing parameter value combination of steady state users which support the multi-user multiplexing technology, judge the resource pool to which each steady state user belongs according to the average multiplexing parameter value combination, and construct the steady state user which belongs to the strong signal area as a multiplexing resource pool.

The space construction unit is further configured to divide the multiplexing resource pool into several sub-resource pools according to a multiplexing parameter sub-threshold value inside the multiplexing resource pool; the multiplexing resource pool construction unit is further configured to judge the sub-resource pool to which each steady state user belongs inside that multiplexing resource pool according to the average multiplexing parameter value combination, and construct a sub-multiplexing resource pool.

The multiplexing parameter combination is a combination (RXLEV, RXQUAL) of received signal level (RXLEV) and received signal quality (RXQUAL), wherein threshold values corresponding to the RXLEV comprise: a low level threshold (Lev_thLow) and a high level threshold (Lev _thHigh); threshold values corresponding to the RXQUAL comprise: a low quality threshold (Qual_thLow) and a high quality threshold (Qual_thHigh).

The multiplexing parameter combination is a combination (RXLEV, RXQUAL, SCPIR) of received signal level (RXLEV), received signal quality (RXQUAL) and the sub channel power imbalance rations (SCPIR), wherein threshold values corresponding to the RXLEV comprise: a low level threshold (Lev_thLow) and a high level threshold (Lev _thHigh); threshold values corresponding to the RXQUAL comprise: a low quality threshold (Qual thLow) and a high quality threshold (Qual thHigh); threshold values corresponding to the SCPIR comprise: a minimum threshold value (SCPIR Min) and a maximum threshold value (SCPIR Max).

The multiplexing module is configured to carry out multi-user multiplexing on adjacent multiplexing users according to the ranking result, and the ranked value parameter is the received signal level (RXLEV), or received signal level (RXQUAL), or the sub channel power imbalance rations (SCPIR). Ranking the multiplexing users in one or more multiplexing resource pools according to the value parameter is to rank according to the received signal level (RXLEV) from high to low, or according to the received signal quality (RXQUAL) from high to low, or according to the sub channel power imbalance rations (SCPIR) from high to low. The ranking can be carried out only inside one resource pool or can be carried out in combination in a plurality of resource pools.

Above description is only to illustrate the preferred embodiments of the present invention but not to limit the present invention. Various alternations and changes to the present invention are apparent to those skilled in the art. The scope of the present invention is defined by the claims.

Those skilled in the art shall understand that all of or part of the steps in the above methods can be completed by instructing relevant hardware by programs, and the programs can be stored in a computer readable storage medium, such as read only memory, magnetic disk, or optical disk, etc. Optionally, all of or part of the steps of the above embodiments can also be implemented using one or more integrated circuits. Accordingly, the respective module/unit in the above embodiments can be implemented by use of hardware or software function module. The present invention is not limited to any particular form of combination of hardware and software.

Industrial Applicability

In the multiplexing method and apparatus in the multi-user multiplexing technology according to the present invention, the parameters affecting user multiplexing are taken into consideration comprehensively, the users are grouped and treated differently, and aspects such as number of users, number of parameters, parameter range and parameter combination can be flexibly extended so as to be suitable for specific application, and finally the users can keep better operation state after multiplexing.

**Claims**

1. A multiplexing method for Voice services over Adaptive Multi-user Channels on One Slot, VAMOS, executed by a multiplexing apparatus, comprising:

   sorting out one or more multiplexing resource pools according to a multiplexing parameter combination; wherein the multiplexing parameter combination is a combination (RXLEV, RXQUAL) of received signal level, RXLEV, and received signal quality, RXQUAL; further wherein threshold values corresponding to the received signal level, RXLEV, comprise: a low level threshold, Lev_thLow, and a high level threshold, Lev_thHigh; and threshold values corresponding to the received signal quality, RXQUAL, comprise: a low quality threshold, Qual_thLow, and a high quality threshold, Qual_thHigh;
   ranking multiplexing users in the one or more multiplexing resource pools according to a value parameter; wherein the value parameter is a received signal level, RXLEV or a received signal quality, RXQUAL, or a sub channel power imbalance ratio, SCPIR; and
   carrying out multiplexing on multiplexing users of which ranks are adjacent according to a ranking result;
   wherein the step of sorting out one or more multiplexing resource pools according to a multiplexing parameter combination comprises:

   first constructing a multiplexing space by taking each multiplexing parameter in the multiplexing parameter combination as a coordinate axes to form a reference coordinate system, and then dividing the multiplexing space into a plurality of resource pools by using the thresholds values corresponding to each multiplexing parameter in the multiplexing parameter combination;
   sorting out a resource pool of which a power is required to be down-regulated or to be kept unchanged from the plurality of resource pools as a strong signal resource pool; and
   acquiring an average multiplexing parameter value combination of steady state users which support the VAMOS, determining the resource pool of the plurality of resource pools to which each steady state user belongs according to the average multiplexing parameter value combination, and constructing, as a multiplexing resource pool, the steady state users which belong to a resource pool of the resource pools sorted out as a strong signal resource pool of which a power is required to be down-regulated or to be kept unchanged.

2. The multiplexing method as claimed in claim 1, wherein
   the step of carrying out multi-user multiplexing on multiplexing users of which ranks are adjacent according to a ranking result begins when a multi-user multiplexing starting threshold is reached and stops when a multi-user multiplexing penetration rate threshold is reached; wherein the multi-user multiplexing starting threshold reflects the occupation rate of channels in a cell, and the multi-user multiplexing penetration sets a proportion of the VAMOS in the cell.

3. The multiplexing method as claimed in claim 1, further comprising:

dividing the constructed multiplexing resource pool into several sub-resource pools according to a multiplexing parameter threshold value inside the constructed multiplexing resource pool, determining the sub-resource pool to which each steady state user belongs inside that constructed multiplexing resource pool according to the average multiplexing parameter value combination, and constructing a sub-multiplexing resource pool.

4. The multiplexing method as claimed in claim 1, wherein ranking the multiplexing users in one or more multiplexing resource pools according to the value parameter is to rank the multiplexing users according to the received signal level, RXLEV, from high to low, or according to the received signal quality, RXQUAL, from high to low, or according to the sub channel power imbalance rations, SCPIR, from high to low.

5. The multiplexing method as claimed in claim 1, wherein
sorting out one or more multiplexing resource pools according to the multiplexing parameter combination and ranking the multiplexing users in one or more multiplexing resource pools according to the value parameter is to rank the users already in a cell; and carrying out multiplexing on multiplexing users of which ranks are adjacent according to the ranking result is to firstly carry out pairing on the multiplexing users of which the ranks are adjacent already in the cell according to the rank result when multiplexing.

6. The multiplexing method as claimed in claim 5, further comprising: after a new user enters the cell, if that new user meets a multiplexing condition, then directly pairing that new user with an already ranked user.

7. The multiplexing method as claimed in claim 1, wherein
if a number of users contained in the constructed multiplexing resource pool is less than a threshold value of the number of users in the plurality of multiplexing resource pools sorted out according to the multiplexing parameter combination, when multiplexing, the users in the constructed multiplexing resource pool where the number of users is less than the threshold value of the number of users are combined with users in other multiplexing resource pools to carry out ranking and multiplexing.

8. A multiplexing apparatus for Voice services over Adaptive Multi-user Channels on One Slot, VAMOS, comprising:

a multiplexing resource pool sorting module configured to sort out one or more multiplexing resource pools according to a multiplexing parameter combination; wherein the multiplexing parameter combination is a combination (RXLEV, RXQUAL) of received signal level, RXLEV, and received signal quality, RXQUAL; further wherein threshold values corresponding to the received signal level (RXLEV) comprise: a low level threshold, Lev_thLow, and a high level threshold, Lev_thHigh; and threshold values corresponding to the received signal quality, RXQUAL, comprise: a low quality threshold, Qual_thLow, and a high quality threshold, Qual_thHigh;
a ranking module configured to rank multiplexing users in the one or more multiplexing resource pools according to a value parameter; wherein the value parameter is a received signal level, RXLEV or a received signal quality, RXQUAL, or a sub channel power imbalance ratio, SCPIR; and
a multiplexing module configured to carry out multiplexing on multiplexing users of which ranks are adjacent according to a ranking result; wherein the multiplexing resource pool sorting module comprises a space construction unit, a resource pool sorting unit and a multiplexing resource pool construction unit, wherein
the space construction unit is configured to construct a multiplexing space by taking each multiplexing parameter in the multiplexing parameter combination as a coordinate axes to form a reference coordinate system, and then divide the multiplexing space into a plurality of resource pools by using the thresholds values corresponding to each multiplexing parameter in the multiplexing parameter combination;
the resource pool sorting unit is configured to sort out a resource pool of which a power is required to be down-regulated or to be kept unchanged from the plurality of resource pools as a strong signal resource pool;
the multiplexing resource pool construction unit is configured to acquire an average multiplexing parameter value combination of steady state users which support the VAMOS, determine the resource pool of the plurality of resource pools to which each steady state user belongs according to the average multiplexing parameter value combination, and construct, as a multiplexing resource pool, the steady state users which belong to a resource pool of the resource pools sorted out as a strong signal resource pool of which a power is required to be down-regulated or to be kept unchanged.

**9.** The multiplexing apparatus as claimed in claim 8, wherein

the multiplexing module is configured to begin to carry out multi-user multiplexing on the multiplexing users of which ranks are adjacent according to a ranking result when a multi-user multiplexing starting threshold is reached and stop multiplexing when a multi-user multiplexing penetration rate threshold is reached; wherein the multi-user multiplexing starting threshold reflects the occupation rate of channels in a cell, and the multi-user multiplexing penetration sets a proportion of the VAMOS in the cell..

**10.** The multiplexing apparatus as claimed in claim 8, wherein

the space construction unit is further configured to divide the constructed multiplexing resource pool into several sub-resource pools according to a multiplexing parameter threshold value inside the constructed multiplexing resource pool: and the multiplexing resource pool construction unit is further configured to determine the sub-resource pool to which each steady state user belongs inside that constructed multiplexing resource pool according to the average multiplexing parameter value combination, and construct a sub-multiplexing resource pool.

**Patentansprüche**

**1.** Multiplexverfahren für VAMOS (Voice services over Adaptive Multi-user Channels on One Slot), ausgeführt von einer Multiplexvorrichtung, das Folgendes beinhaltet:

Aussortieren von einem oder mehreren Multiplex-Ressourcenpools gemäß einer Multiplex-Parameterkombination; wobei die Multiplex-Parameterkombination eine Kombination (RXLEV, RXQUAL) von Empfangssignalpegel RXLEV und Empfangssignalqualität RXQUAL ist; wobei ferner Schwellenwerte entsprechend dem Empfangssignalpegel RXLEV Folgendes umfassen: eine Low-Level-Schwelle Lev_thLow und eine High-Level-Schwelle Lev_thHigh; und Schwellenwerte entsprechend der Empfangssignalqualität RXQUAL Folgendes umfassen: eine Niederqualitätsschwelle Qual_thLow und eine Hochqualitätsschwelle Qual_thHigh; Einordnen von Multiplex-Benutzern in einen Rang in den ein oder mehreren Multiplex-Ressourcenpools gemäß einem Werteparameter; wobei der Werteparameter ein Empfangssignalpegel RXLEV oder eine Empfangssignalqualität RXQUAL oder ein Subkanal-Leistungsungleichgewichtsverhältnis SCPIR ist; und Durchführen von Multiplexen an Multiplex-Benutzern, deren Ränge gemäß einem Rangeinordnungsergebnis nebeneinander liegen;

wobei der Schritt des Aussortierens von einem oder mehreren Multiplex-Ressourcenpools gemäß einer Multiplex-Parameterkombination Folgendes beinhaltet:

zunächst Konstruieren eines Multiplexraums durch Nehmen jedes Multiplexparameters in der Multiplex-Parameterkombination als Koordinatenachsen zum Bilden eines Referenzkoordinatensystems, und dann Unterteilen des Multiplexraums in mehrere Ressourcenpools anhand der Schwellenwerte entsprechend jedem Multiplexparameter in der Multiplex-Parameterkombination;
Aussortieren eines Ressourcenpools, dessen Leistung herabreguliert oder unverändert gehalten werden soll, aus den mehreren Ressourcenpools als Starkes-Signal-Ressourcenpool; und Erfassen einer durchschnittlichen Multiplex-Parameterwertekombination von Steady-State-Benutzern, die VAMOS unterstützen,

Bestimmen des Ressourcenpools der mehreren Ressourcenpools, zu dem jeder Steady-State-Benutzer gehört, gemäß der durchschnittlichen Multiplex-Parameterwertekombination, und Konstruieren, als Multiplex-Ressourcenpool, der Steady-State-Benutzer, die zu einem Ressourcenpool der Ressourcenpools gehören, der als Starkes-Signal-Ressourcenpool aussortiert wurde, dessen Leistung herabreguliert oder unverändert gehalten werden soll.

**2.** Multiplexverfahren nach Anspruch 1, wobei der Schritt des Durchführens von Mehrbenutzer-Multiplexen an Multiplex-Benutzern, deren Ränge gemäß einem Rangeinordnungsergebnis nebeneinander liegen, beginnt, wenn eine Mehrbenutzer-Multiplex-Anfangsschwelle erreicht ist, und aufhört, wenn eine Mehrbenutzer-Multiplex-Penetrationsratenschwelle erreicht ist; wobei die Mehrbenutzer-Multiplex-Anfangsschwelle die Belegungsrate von Kanälen in einer Zelle reflektiert, und die Mehrbenutzer-Multiplex-Penetration einen VAMOS-Anteil in der Zelle festlegt.

**3.** Multiplexverfahren nach Anspruch 1, das ferner Folgendes beinhaltet:

Unterteilen des konstruierten Multiplex-Ressourcenpools in mehrere Subressourcenpools gemäß einem Multiplex-Parameterschwellenwert innerhalb des konstruierten Multiplex-Ressourcenpools, Bestimmen des Subressourcenpools, zu dem jeder Steady-State-Benutzer gehört, innerhalb dieses konstruierten Multiplex-Ressourcenpools gemäß der durchschnittlichen Multiplex-Parameterwertekombination, und Konstruieren eines Submultiplex-Ressourcenpools.

4. Multiplexverfahren nach Anspruch 1, wobei das Einordnen der Multiplex-Benutzer in einen oder mehrere Multiplex-Ressourcenpools gemäß dem Werteparameter im Einordnen der Multiplex-Benutzer in eine Rangfolge gemäß dem Empfangssignalpegel RXLEV von hoch zu tief oder gemäß der Empfangssignalqualität RXQUAL von hoch zu tief oder gemäß den Subkanal-Leistungsungleichgewichtsverhältnissen SCPIR von hoch zu tief besteht.

5. Multiplexverfahren nach Anspruch 1, wobei das Aussortieren von einem oder mehreren Multiplex-Ressourcenpools gemäß der Multiplex-Parameterkombination und das Einordnen der Multiplex-Benutzer in einen oder mehrere Multiplex-Ressourcenpools gemäß dem Werteparameter im Einordnen der Multiplex-Benutzer in eine Rangfolge bereits in einer Zelle besteht; und das Durchführen von Multiplexen an Multiplex-Benutzern, deren Ränge gemäß dem Rangeinordnungsergebnis nebeneinander liegen, darin besteht, zunächst die Multiplex-Benutzer zu paaren, deren Ränge bereits in der Zelle nebeneinander liegen, gemäß dem Rangeinordnungsergebnis beim Multiplexen.

6. Multiplexverfahren nach Anspruch 5, das ferner Folgendes beinhaltet: direktes Paaren bei Eintritt eines neuen Benutzers in die Zelle, wenn dieser neue Benutzer eine Multiplexbedingung erfüllt, dieses neuen Benutzers mit einem bereits in eine Rangfolge eingeordneten Benutzer.

7. Multiplexverfahren nach Anspruch 1, wobei, wenn eine Anzahl von im konstruierten Multiplex-Ressourcenpool enthaltenen Benutzern geringer ist als ein Schwellenwert der Anzahl von Benutzern in den gemäß der Multiplex-Parameterkombination aussortierten mehreren Multiplex-Ressourcenpools, beim Multiplexen, die Benutzer im konstruierten Multiplex-Ressourcenpool, in dem die Anzahl von Benutzern geringer ist als der Schwellenwert der Anzahl von Benutzern, mit Benutzern in anderen Multiplex-Ressourcenpools kombiniert werden, um Rangfolgeeinordnen und Multiplexen durchzuführen.

8. Multiplexvorrichtung für VAMOS (Voice services over Adaptive Multi-user Channels on One Slot), die Folgendes umfasst:

ein Multiplex-Ressourcenpool-Sortiermodul, das zum Aussortieren von einem oder mehreren Multiplex-Ressourcenpools gemäß einer Multiplex-Parameterkombination konfiguriert ist; wobei die Multiplex-Parameterkombination eine Kombination (RXLEV, RXQUAL) von Empfangssignalpegel RXLEV und Empfangssignalqualität RXQUAL ist; wobei ferner Schwellenwerte entsprechend dem Empfangssignalpegel (RXLEV) Folgendes umfassen: eine Low-Level-Schwelle Lev_thLow und eine High-Level-Schwelle Lev_thHigh; und Schwellenwerte entsprechend der Empfangssignalqualität RXQUAL Folgendes umfassen: eine Niederqualitätsschwelle Qual_thLow und eine Hochqualitätsschwelle Qual_thHigh;

ein Rangeinordnungsmodul, konfiguriert zum Einordnen von Multiplex-Benutzern in den ein oder mehreren Multiplex-Ressourcenpools gemäß einem Werteparameter in eine Rangfolge; wobei der Werteparameter ein Empfangssignalpegel RXLEV oder eine Empfangssignalqualität RXQUAL oder ein Subkanal-Leistungsungleichgewichtsverhältnis SCPIR ist; und

ein Multiplexmodul, konfiguriert zum Durchführen von Multiplexen an Multiplex-Benutzern, deren Ränge gemäß einem Rangeinordnungsergebnis nebeneinander liegen;

wobei das Multiplex-Ressourcenpool-Sortiermodul eine Raumkonstruktionseinheit, eine Ressourcenpool-Sortiereinheit und eine Multiplex-Ressourcenpool-Konstruktionseinheit umfasst, wobei

die Raumkonstruktionseinheit zum Konstruieren eines Multiplexraums konfiguriert ist, indem jeder Multiplex-Parameter in der Multiplex-Parameterkombination als Koordinatenachsen zum Bilden eines Referenzkoordinatensystems genommen und dann der Multiplexraum in mehrere Ressourcenpools unterteilt wird, durch Benutzen der Schwellenwerte entsprechend jedem Multiplex-Parameter in der Multiplex-Parameterkombination;

die Ressourcenpool-Sortiereinheit zum Aussortieren eines Ressourcenpools, von dem eine Leistung herabreguliert oder unverändert gehalten werden soll, aus den mehreren Ressourcenpools als Starkes-Signal-Ressourcenpool konfiguriert ist;

die Multiplex-Ressourcenpool-Konstruktionseinheit konfiguriert ist zum Erfassen einer durchschnittlichen Multiplex-Parameterwertekombination von Steady-State-Benutzern, die VAMOS unterstützen, Bestimmen des Ressourcenpools der mehreren Ressourcenpools, zu dem jeder Steady-State-Benutzer gehört, gemäß der durchschnittlichen Multiplex-Parameterwertekombination, und Konstruieren, als Multiplex-Ressourcenpool, der Steady-State-Benutzer, die zu einem Ressourcenpool der Ressourcenpools gehören, der als Starkes-Signal-Ressourcenpool aussortiert wurde, von dem eine Leistung herabreguliert oder unverändert gehalten werden soll.

9. Multiplexvorrichtung nach Anspruch 8, wobei das Multiplexmodul konfiguriert ist zum Beginnen der Durchführung von Mehrbenutzer-Multiplexen an den Multiplex-Benutzern, deren Ränge gemäß einem Rangeinordnungsergebnis nebeneinander liegen, wenn eine Mehrbenutzer-Multiplex-Anfangsschwelle erreicht ist, und zum Stoppen des Multiplexens, wenn eine Mehrbenutzer-Multiplex-Penetrationsratenschwelle erreicht ist; wobei die Mehrbenutzer-Multiplex-Anfangsschwelle die Belegungsrate von Kanälen in einer Zelle reflektiert und die Mehrbenutzer-Multiplex-Penetration einen VAMOS-Anteil in der Zelle festlegt.

10. Multiplexvorrichtung nach Anspruch 8, wobei die Raumkonstruktionseinheit ferner zum Unterteilen des konstruierten Multiplex-Ressourcenpools in mehrere Subressourcenpools gemäß einem Multiplex-Parameterschwellenwert innerhalb des konstruierten Multiplex-Ressourcenpools konfiguriert ist; und die Multiplex-Ressourcenpool-Konstruktionseinheit ferner konfiguriert ist zum Bestimmen des Subressourcenpools, zu dem jeder Steady-State-Benutzer innerhalb dieses konstruierten Multiplex-Ressourcenpools gemäß der durchschnittlichen Multiplex-Parameterwertekombination gehört, und zum Konstruieren eines Submultiplex-Ressourcenpools.

**Revendications**

1. Procédé de multiplexage pour des services vocaux sur des canaux multi-utilisateurs adaptatifs sur un créneau (VAMOS), exécuté par un appareil de multiplexage, consistant à :

trier un ou plusieurs ensembles de ressources de multiplexage selon une combinaison de paramètres de multiplexage ; la combinaison de paramètres de multiplexage étant une combinaison (RXLEV, RXQUAL) d'un niveau de signal reçu (RXLEV) et d'une qualité de signal reçu (RXQUAL) ; et en outre, des valeurs de seuil correspondant au niveau de signal reçu (RXLEV) comprenant : un seuil de niveau bas (Lev_thLow) et un seuil de niveau haut (Lev_thHigh) ; et des valeurs de seuil correspondant à la qualité de signal reçu (RXQUAL) comprenant : un seuil de qualité basse (Qual_thLow) et un seuil de qualité haute (Qual_thHigh) ; classer les utilisateurs de multiplexage dans le ou les ensembles de ressources de multiplexage selon un paramètre de valeur ; le paramètre de valeur étant un niveau de signal reçu (RXLEV) ou une qualité de signal reçu (RXQUAL) ou un rapport de déséquilibre de puissance de sous-canal (SCPIR) ; et exécuter un multiplexage sur des utilisateurs de multiplexage dont les classements sont adjacents selon un résultat de classement ;

l'étape de tri d'un ou plusieurs ensembles de ressources de multiplexage selon une combinaison de paramètres de multiplexage consistant à :

construire d'abord un espace de multiplexage en prenant chaque paramètre de multiplexage dans la combinaison de paramètres de multiplexage en tant qu'axes de coordonnées pour former un système de coordonnées de référence, puis diviser l'espace de multiplexage en une pluralité d'ensembles de ressources au moyen des valeurs de seuil correspondant à chaque paramètre de multiplexage dans la combinaison de paramètres de multiplexage ; trier un ensemble de ressources dont une puissance doit être régulée vers le bas ou doit être maintenue inchangée parmi la pluralité d'ensembles de ressources, en tant qu'ensemble de ressources de signal fort ; et acquérir une combinaison de valeurs moyennes de paramètre de multiplexage d'utilisateurs à l'état stable qui prennent en charge les VAMOS,

déterminer, parmi la pluralité d'ensembles de ressources, l'ensemble de ressources auquel appartient chaque utilisateur à l'état stable selon la combinaison de valeurs moyennes de paramètre de multiplexage, et construire, en tant qu'ensemble de ressources de multiplexage, les utilisateurs à l'état stable qui appartiennent, parmi les ensembles de ressources, à un ensemble de ressources trié en tant qu'ensemble de ressources de signal fort dont une puissance doit être régulée vers le bas ou doit être maintenue inchangée.

2. Procédé de multiplexage selon la revendication 1, dans lequel :

l'étape consistant à exécuter un multiplexage multi-utilisateur sur des utilisateurs de multiplexage dont les classements sont adjacents selon un résultat de classement commence quand un seuil de démarrage de multiplexage multi-utilisateur est atteint, et s'arrête quand un seuil de taux de pénétration de multiplexage multi-utilisateur est atteint ; le seuil de démarrage de multiplexage multi-utilisateur reflétant le taux d'occupation de canaux dans une cellule, et la pénétration de multiplexage multi-utilisateur définissant une proportion des VAMOS dans la cellule.

**3.** Procédé de multiplexage selon la revendication 1, consistant en outre à :

diviser l'ensemble de ressources de multiplexage construit en plusieurs sous-ensembles de ressources selon une valeur de seuil de paramètre de multiplexage à l'intérieur de l'ensemble de ressources de multiplexage construit ; déterminer le sous-ensemble de ressources auquel appartient chaque utilisateur à l'état stable à l'intérieur de cet ensemble de ressources de multiplexage construit, selon la combinaison de valeurs moyennes de paramètre de multiplexage ; et construire un sous-ensemble de ressources de multiplexage.

**4.** Procédé de multiplexage selon la revendication 1, dans lequel le classement des utilisateurs de multiplexage dans un ou plusieurs ensembles de ressources de multiplexage selon le paramètre de valeur consiste à classer les utilisateurs de multiplexage selon le niveau de signal reçu (RXLEV), de haut à bas, ou selon la qualité de signal reçu (RXQUAL), de haut à bas, ou selon les rapports de déséquilibre de puissance de sous-canal (SCPIR), de haut à bas.

**5.** Procédé de multiplexage selon la revendication 1, dans lequel :

trier un ou plusieurs ensembles de ressources de multiplexage selon la combinaison de paramètres de multiplexage, et le classement des utilisateurs de multiplexage dans un ou plusieurs ensembles de ressources de multiplexage selon le paramètre de valeur consiste à classer les utilisateurs déjà dans une cellule ; et l'exécution d'un multiplexage sur des utilisateurs de multiplexage dont les classements sont adjacents selon un résultat de classement consiste à exécuter premièrement un appariement sur les utilisateurs de multiplexage déjà dans la cellule et dont les classements sont adjacents, selon le résultat de classement lors du multiplexage.

**6.** Procédé de multiplexage selon la revendication 5, consistant en outre à :

après l'entrée d'un nouvel utilisateur dans la cellule, si ce nouvel utilisateur satisfait à une condition de multiplexage, alors apparier directement ce nouvel utilisateur à un utilisateur déjà classé.

**7.** Procédé de multiplexage selon la revendication 1, dans lequel :

si un certain nombre d'utilisateurs contenus dans l'ensemble de ressources de multiplexage construit est inférieur à une valeur de seuil du nombre d'utilisateurs dans la pluralité d'ensembles de ressources de multiplexage triés selon la combinaison de paramètres de multiplexage, alors lors du multiplexage, les utilisateurs dans l'ensemble de ressources de multiplexage construit où le nombre d'utilisateurs est inférieur à la valeur de seuil du nombre d'utilisateurs sont combinés avec des utilisateurs dans d'autres ensembles de ressources de multiplexage pour exécuter un classement et un multiplexage.

**8.** Appareil de multiplexage pour des services vocaux sur des canaux multi-utilisateurs adaptatifs sur un créneau (VAMOS), comprenant :

un module de tri d'ensemble de ressources de multiplexage, configuré pour trier un ou plusieurs ensembles de ressources de multiplexage selon une combinaison de paramètres de multiplexage ; la combinaison de paramètres de multiplexage étant une combinaison (RXLEV, RXQUAL) d'un niveau de signal reçu (RXLEV) et d'une qualité de signal reçu (RXQUAL) ; et en outre, des valeurs de seuil correspondant au niveau de signal reçu (RXLEV) comprenant : un seuil de niveau bas (Lev_thLow) et un seuil de niveau haut (Lev_thHigh) ; et des valeurs de seuil correspondant à la qualité de signal reçu (RXQUAL) comprenant : un seuil de qualité basse (Qual_thLow) et un seuil de qualité haute (Qual_thHigh) ; un module de classement, configuré pour classer les utilisateurs de multiplexage dans le ou les ensembles de ressources de multiplexage selon un paramètre de valeur ; le paramètre de valeur étant un niveau de signal reçu (RXLEV) ou une qualité de signal reçu (RXQUAL) ou un rapport de déséquilibre de puissance de sous-canal (SCPIR) ; et un module de multiplexage, configuré pour exécuter un multiplexage sur des utilisateurs de multiplexage dont les classements sont adjacents selon un résultat de classement ; le module de tri d'ensemble de ressources de multiplexage comprenant une unité de construction d'espace, une unité de tri d'ensemble de ressources et une unité de construction d'ensemble de ressources de multiplexage, l'unité de construction d'espace étant configurée pour construire un espace de multiplexage en prenant chaque paramètre de multiplexage dans la combinaison de paramètres de multiplexage en tant qu'axes de coordonnées pour former un système de coordonnées de référence, puis diviser l'espace de multiplexage en une pluralité d'ensembles de ressources au moyen des valeurs de seuil correspondant à chaque paramètre de multiplexage dans la combinaison de paramètres de multiplexage ;

l'unité de tri d'ensembles de ressources étant configurée pour trier un ensemble de ressources dont une puissance doit être régulée vers le bas ou doit être maintenue inchangée parmi la pluralité d'ensembles de ressources, en tant qu'ensemble de ressources de signal fort ;

l'unité de construction d'ensemble de ressources de multiplexage étant configurée pour acquérir une combinaison de valeurs moyennes de paramètre de multiplexage d'utilisateurs à l'état stable qui prennent en charge les VAMOS, déterminer, parmi la pluralité d'ensembles de ressources, l'ensemble de ressources auquel appartient chaque utilisateur à l'état stable selon la combinaison de valeurs moyennes de paramètre de multiplexage, et construire, en tant qu'ensemble de ressources de multiplexage, les utilisateurs à l'état stable qui appartiennent, parmi les ensembles de ressources, à un ensemble de ressources trié en tant qu'ensemble de ressources de signal fort dont une puissance doit être régulée vers le bas ou doit être maintenue inchangée.

9. Appareil de multiplexage selon la revendication 8, dans lequel :

le module de multiplexage est configuré pour commencer à exécuter un multiplexage multi-utilisateur sur les utilisateurs de multiplexage dont les classements sont adjacents selon un résultat de classement quand un seuil de démarrage de multiplexage multi-utilisateur est atteint, et arrêter le multiplexage quand un seuil de taux de pénétration de multiplexage multi-utilisateur est atteint ; le seuil de démarrage de multiplexage multi-utilisateur reflétant le taux d'occupation de canaux dans une cellule, et la pénétration de multiplexage multi-utilisateur définissant une proportion des VAMOS dans la cellule.

10. Appareil de multiplexage selon la revendication 8, dans lequel :

l'unité de construction d'espace est en outre configurée pour diviser l'ensemble de ressources de multiplexage construit en plusieurs sous-ensembles de ressources selon une valeur de seuil de paramètre de multiplexage à l'intérieur de l'ensemble de ressources de multiplexage construit ; et

l'unité de construction d'ensemble de ressources de multiplexage est en outre configurée pour déterminer le sous-ensemble de ressources auquel appartient chaque utilisateur à l'état stable à l'intérieur de cet ensemble de ressources de multiplexage construit, selon la combinaison de valeurs moyennes de paramètre de multiplexage, et construire un sous-ensemble de ressources de multiplexage.

ARFCN: 160
TS: 3
TSC: 0

Base
station
BTS

ARFCN: 160
TS: 3
TSC: 5

ARFCN: 160
TS: 3
TSC: 5

ARFCN: 160
TS: 3
TSC: 0

Mobile station
MS1

Mobile station
MS2

FIG. 1

Start

Maintain user list and rank by RefV
in a descending order

New user?

No

Yes

Whether
the VAMOS starting threshold
is reached?

No

Yes

Whether
the new user can be paired
with an old user in the
list?

Yes

No

The old users in the list complexes
two by two as VAMOS user pairs
successively until the VAMOS
penetration rate threshold is reached

Designate a
VAMOS channel for
the new user and
multiplex with the
matched old user

Update the list according to the pair result

Designate a non-VAMOS channel for
the new user

End

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005286408 A1